# EUROPÄISCHE PATENTSCHRIFT

(11) **EP 2 075 296 B1**
(45) Veröffentlichungstag und Bekanntmachung des Hinweises auf die Patenterteilung: **14.09.2011**
(21) Anmeldenummer: 09005587.2
(22) Anmeldetag: 23.05.2006
(51) Int. Cl.: C09J 5/00, B29C 49/04, C09J 7/04

(54) **Verfahren zum Kaschieren eines partikelarmen Folienschlauches**
Method for laminating low-particle film hoses
Procede de laminage d'un film tubulaire contenant une faible quantite de particules

(30) Priorität: 23.05.2005 DE 102005024150
(43) Veröffentlichungstag der Anmeldung: 01.07.2009
(62) Teilanmeldung aus: 06753804.1
(73) Patentinhaber: Schmittlein, Martin, 66113 Saarbrücken (DE); Nicola, Thomas, 57350 Spicheren (FR)
(72) Erfinder: Schmittlein, Martin, 66113 Saarbrücken (DE); Nicola, Thomas, 57350 Spicheren (FR)
(74) Vertreter: Rippel, Hans Christoph

(56) Entgegenhaltungen:
- EP-A- 0 484 675
- WO-A-00/23507
- DE-A1- 19 847 845

## Beschreibung

Die vorliegende Erfindung betrifft ein Verfahren zur Herstellung eines extrusionskaschierten bzw. eines heißlaminierten extrudierten Folienschlauches. Darüber hinaus betrifft die vorliegende Erfindung die Verwendung eines derartig hergestellten Folienschlauches für medizinische Anwendungen.

Mehrlagige, kaschierte Kunststofffolien sind bekannt. Aus diesen bekannten Folien lassen sich durch Heißsiegeln Schläuche herstellen. Die Herstellung von entsprechenden Schlauchfolien ist beispielsweise in der EP 0 993 940 A1 beschrieben. Zu diesem Zweck wird eine heißschrumpffähige, kaschierte oder beschichtete Kunststofffolie, die ein- oder beidseitig eine heißsiegelfähige Polyethylen-, Polypropylen- oder Ethylen/Propylen-Copolymerschicht sowie eine Schicht aus Polyethylenterephthalat, Polyamid oder Polypropylen besitzt, hergestellt. Zur Herstellung der Schlauchfolie wird dann diese Mehrschichtfolie in Streifen geschnitten, die dann mit Hilfe einer sogenannten "Formschulter" zu einem Schlauch mit überlappenden Längsrändern geformt werden. Durch die Einwirkung von Druck und Hitze auf die Folie in einem Siegelwerkzeug werden dann die Ränder fest miteinander verbunden. Nachteilig an diesem Verfahren ist, dass mehrere Schritte zur Herstellung einer entsprechenden Schlauchfolie erforderlich sind. So wird zunächst eine entsprechende Folie, beispielsweise durch Extrusion, bereitgestellt, die dann mit den entsprechenden Funktionsbeschichtungen versehen wird. Erst im Anschluss erfolgt die Bildung der Schlauchfolie ausgehend von diesen mit den Funktionsschichten versehenen Folien. Damit ergibt sich insgesamt ein Herstellungsverfahren für die Schlauchfolie, welches drei isolierte Verfahrensschritte umfasst.

Darüber hinaus ermöglicht die Verfahrensweise gemäß EP 0 993 940 A1 nur unter sehr komplexen Verfahrensbedingungen die Herstellung von innenseitig partikelarmen bzw. partikelfreien Folienschläuchen für medizinische Anwendungen:
Da die in dem Folienschlauch innenliegenden Seiten zunächst "offene Seiten" der Kunststofffolien sind, werden innenseitig partikelarme bzw. partikelfreie Folienschläuche nur dann erhalten, wenn entweder alle Verfahrensschritte zur Herstellung der Folienschläuche in Reinräumen durchgeführt werden oder aber nach Herstellung des Folienschlauches dieser innenseitig mit sterilgefilterter Luft geflutet wird. Jedoch selbst unter Reinraumbedingungen lässt sich nicht ausschließen, dass aufgrund der elektrostatischen Aufladung der Folienschläuche Verunreinigungen in den Innenraum der Folienschläuche gelangen können.

Aufgabe der vorliegenden Erfindung ist es demgemäß, ein Verfahren zur Herstellung eines Folienschlauches bereitzustellen, durch welches auf wirtschaftlich einfache Weise ein Folienschlauch mit einer Funktionsschicht bereitgestellt wird, wobei die Innenseite des Folienschlauches vorzugsweise im Wesentlichen partikelfrei ist und die Funktionsschicht eine niedrige Wasserdampf- und Gasdurchlässigkeit aufweist.

Gelöst wird diese Aufgabe durch ein Verfahren zur Beschichtung eines extrudierten Folienschlauches.

Gegenstand der Erfindung ist somit ein Verfahren zur Herstellung eines kaschierten Folienschlauches, umfassend die folgenden Verfahrensschritte:
(a) Herstellen eines Folienschlauches durch Schmelzextrusion eines Kunststoffes, wobei der Innenraum des Folienschlauches vorzugsweise mit steril gefilterter Luft geflutet wird;
(b) gegebenenfalls Abkühlen des in Verfahrensschritt (a) hergestellten Folienschlauches und
(c) Beschichten des gegebenenfalls abgekühlten Folienschlauches mit einer Funktionsschicht.

Das erfindungsgemäße Verfahren gemäß einer erster Ausführungsform umfasst dann die folgenden Verfahrensschritte zur Herstellung eines extrusionskaschierten Folienschlauches:
(a') Herstellen eines Folienschlauches durch Schmelzextrusion eines Kunststoffes, wobei der Innenraum des Folienschlauches vorzugsweise mit steril gefilterter Luft geflutet wird;
(b') gegebenenfalls Abkühlen des in Verfahrensschritt (a') hergestellten Folienschlauches;
(c') Beschichten des gegebenenfalls abgekühlten Folienschlauches mit einer Haftkleberadhäsivschicht auf mindestens einer Seite des Folienschlauches;
(d') gegebenenfalls Trocknen des mit der Haftkleberadhäsivschicht versehenen Folienschlauches;
(e') Kaschieren der mindestens einen mit der Haftkleberadhäsivschicht beschichteten Seite des Folienschlauches mit einer Funktionsschicht;
(f) gegebenenfalls Trocknen bzw. Aushärten des kaschierten Folienschlauches.

Erfindungsgemäß ist somit vorgesehen, dass zunächst ein Folienschlauch durch Schmelzextrusion hergestellt wird, wobei der hierbei erhaltene Folienschlauch dann vorzugsweise unmittelbar auf mindestens einer Seite des Folienschlauches mit einer Haftkleberadhäsivschicht versehen wird. Auf diese Haftkleberadhäsivschicht wird dann die erforderliche Funktionsschicht aufgetragen.

Insbesondere Folienschläuche, die für medizinische Zwecke hergestellt werden, sollten in dem resultierenden Innenraum des Folienschlauches zumindest partikelfrei sein. Wenn ein beschichteter Folienschlauch aus einlagigen einzelnen beschichteten Folien erzeugt wird, hat dieses, wie bereits dargelegt, den Nachteil, dass der Innenraum des resultierenden Folienschlauches nicht im Wesentlichen partikelarm ist. Im erfindungsgemäßen Verfahren wird daher vorgeschlagen, dass zunächst ein Folienschlauch erzeugt wird, wobei dabei der Innenraum des Folienschlauches vorzugsweise mit steril gefilterter Luft geflutet wird. Die beiden parallelen innenliegenden Seiten des Folienschlauches haften nach der Schmelzextrusion des Folienschlauches vorzugsweise unmittelbar aufeinander, so dass eine Beschichtung der Außenseiten des Folienschlauches bei einem geschlossenen Innenraum des Folienschlauches möglich ist. Der dabei geschlossene Innenraum, der bei einer späteren Verwendung des resultierenden Folienschlauches aufgebläht wird, ist damit im Wesentlichen partikelfrei.

In dem erfindungsgemäßen Verfahren ist es auch möglich, dass der in Verfahrenschritt (a') hergestellte Folienschlauch beidseitig kaschiert wird. Zu diesem Zweck kann beispielsweise eine Seite des Folienschlauches mit dem Haftkleber beschichtet werden und der mit dem Haftkleber beschichtete Folienschlauch dann gegebenenfalls gekühlt werden. Die mit dem Haftkleber beschichtete Seite des Folienschlauches wird dann mit einer Funktionsschicht kaschiert. Im Anschluss kann der so einseitig kaschierte Folienschlauch gegebenenfalls gekühlt werden. Anschließend wird die zweite Seite des Folienschlauches mit dem Haftkleber beschichtet. Der mit dem Haftkleber auf der zweiten Seite beschichtete Folienschlauch kann gegebenenfalls gekühlt und dann mit einer weiteren Funktionsschicht kaschiert werden. Anschließend kann der beidseitig kaschierte Folienschlauch gegebenenfalls noch einem Kühlungsschritt oder einer Wärmebehandlung unterzogen werden.

Darüber hinaus ist es auch möglich, dass der in Verfahrensschritt (a') hergestellte Folienschlauch beidseitig kaschiert wird, wobei die Beschichtung des Folienschlauches mit dem Haftkleber und/oder der Funktionsschicht auf beiden Seiten des Folienschlauches zumindest teilweise gleichzeitig erfolgt.

In dem erfindungsgemäßen Verfahren gemäß erster Ausführungsform wird vorzugsweise ein Haftkleber verwendet, der eine vollständige Abbindung nach ungefähr 2 Wochen ermöglicht. In einer Wärmekammer kann die Abbindung bei erhöhter Temperatur, vorzugsweise 30°C oder mehr, beispielsweise bei 40°C, auch schneller erfolgen.

Geeignete Adhäsivmaterialien sind beispielsweise Isocyanate, Polyurethane, Poly(ethylacrylat/methacrylsäureester), Reinacrylatcopolymerisate, Vinylester-/Acrylat-Copolymerisate oder anorganische-organische Hydridpolymere, wie sie beispielsweise in der EP 0 882 657 B1 genannt sind.

In einer besonders bevorzugten Ausführungsform der vorliegenden Erfindung wird der Adhäsivkleber so gewählt, dass er die Anforderungen von Pharmakopoe Limits, beispielsweise hinsichtlich von Migrationseigenschaften einhält.

Die Adhäsivschicht kann - je nach Verfahrensweise oder gewünschter Beschichtung - einseitig oder beidseitig auf den durch Coextrusion hergestellten Folienschlauch aufgetragen werden. Dieses kann beispielsweise durch Aufspritzen oder Aufrakeln erfolgen. Geeignet ist auch die Verwendung von organischen oder wässrigen Lösungen der entsprechenden Adhäsivmittel.

Nach dem Auftragen dieser Adhäsivschichten kann der resultierende Folienschlauch gegebenenfalls getrocknet werden. Beispielsweise kann, wenn die Auftragung des Adhäsivs unter Verwendung eines organischen Lösemittels oder Wasser erfolgt, das Trocknen unter Verdunstung des Lösemittels oder des Wassers erfolgen. Die Schichtdicken der Haftkleberadhäsivschichten liegen vorzugsweise im Bereich von 3 bis 20 µm.

Es ist besonders bevorzugt, wenn die so erzeugte Adhäsivschicht bereits eine Wasser- und/oder Gasbarriere auf dem extrudierten Folienschlauch bildet.

In einer weiteren Ausführungsform ist es auch möglich, die Adhäsivschicht nicht auf den extrudierten Folienschlauch aufzutragen, sondern auf die auf den Folienschlauch aufgebrachte Funktionsschicht, welche weiter unten beschrieben wird.

Die Kaschierung in der ersten Ausführungsform des erfindungsgemäßen Verfahrens kann vorzugsweise mittels Kaschierwalzen oder auf Kalandern bei Raumtemperatur erfolgen.

In einer zweiten Ausführungsform wird die Aufgabe der vorliegenden Erfindung durch ein Verfahren zur Herstellung eines heißlaminierten extrudierten Folienschlauches gelöst.

Das erfindungsgemäße Verfahren gemäß dieser zweiten Ausführungsform ist durch folgende Verfahrensschritte gekennzeichnet:
(a") Herstellen eines Folienschlauches durch Schmelzextrusion eines Kunststoffes;
(b") gegebenenfalls Abkühlen des in Verfahrensschritt (a") hergestellten Folienschlauches;
(c") Heißlaminieren des gegebenenfalls getrockneten Folienschlauches mit einer Funktionsschicht.

Da in Verfahrensschritt (c") ein Heißlaminieren des Folienschlauches vorgesehen ist, ist es bevorzugt, wenn die Funktionsschicht temperaturunempfindlich ist.

Auch gemäß der zweiten Ausführungsform des erfindungsgemäßen Verfahrens ist es möglich, dass der in Verfahrensschritt (a") hergestellte Folienschlauch beidseitig kaschiert wird. Zu diesem Zweck kann die Heißlaminierung mit der Funktionsschicht nach dem Herstellen des Folienschlauches durch Schmelzextrusion eines Kunststoffes und gegebenenfalls Abkühlen des so hergestellten Folienschlauches zunächst auf der einen Seite und dann auf der anderen Seite des Folienschlauches erfolgen. Genauso ist es möglich, dass der Folienschlauch auf beiden Seiten zumindest teilweise gleichzeitig mit der Funktionsschicht heißlaminiert wird. Vor dem Kaschieren einer jeden Seite ist es jedoch bevorzugt, dass der Folienschlauch nach dem Abkühlen flachgelegt wird.

Gemäß beiden Ausführungsformen des erfindungsgemäßen Verfahrens ist es bevorzugt, dass der Folieninnenraum während des oder der Kaschiervorgänge bzw. des oder der Heißlaminierungen geschlossen verbleibt, so dass es sich hierbei um einen im Wesentlichen partikelarmen bzw. partikelfreien Folieninnenraum handelt.

In dem erfindungsgemäßen Verfahren gemäß erster und gemäß zweiter Ausführungsform wird der in Verfahrensschritt (a') bzw. (a") zur Herstellung des Folienschlauches verwendete Kunststoff vorzugsweise ausgewählt aus der Gruppe, bestehend aus Polypropylen, Polyethylen-Copolymeren, Styrol-EthylenButylen-Styrol-Blockcopolymeren (SEBS), Styrol-Isopren-Styrol-Blockcopolymeren (SIS) und thermoplastische Elastomere (TPE).

Die in beiden Ausführungsformen des vorliegenden Verfahrens gegebenenfalls durchzuführenden Verfahrensschritte des Abkühlens können jeweils außenseitig auf dem vorzugsweise geschlossenen Folienschlauch beispielsweise durch Luft erfolgen. Auch ist es möglich, den Trocknungsvorgang in einem Trockenkanal durchzuführen.

Die Herstellung des erfindungsgemäß vorgesehenen Folienschlauches durch Schmelzextrusion eines Kunststoffes kann in jeder, dem Fachmann an sich bekannten und geeigneten Extrudervorrichtung erfolgen. Als Beispiel sei ein Einschneckenblasextruder genannt.

Gemäß erster oder zweiter Ausführungsform der vorliegenden Erfindung ist es bevorzugt. dass der Folienschlauch vor dem Auftragen des Haftklebers, vor dem Kaschieren mit der Funktionsschicht und/oder vor der Heißlaminierung über eine Flachlegevorrichtung läuft. Das Flachlegen des Folienschlauches kann alternativ auch unmittelbar nach der Folienextrusion erfolgen. Sodann kann in einer weiteren Ausführungsform der extrudierte Folienschlauch aufgewickelt werden und dann kaschiert werden.

In einer besonders bevorzugten Ausführungsform weist die Schlauchfolie eine Dicke von 50 bis 300 µm auf.

In beiden Ausführungsformen des vorliegenden Verfahrens wird der durch Schmelzextrusion eines Kunststoffes hergestellte Folienschlauch mit einer Funktionsschicht versehen. Diese Funktionsschicht bewirkt vorzugsweise, dass der resultierende, d. h. beschichtete Folienschlauch gasdicht und/oder wasserdicht ist.

Wenn durch die Funktionsschicht ein gasdichter Folienschlauch erzeugt werden soll, so kann beispielsweise als Funktionsschicht ein Ethylen-Vinylalkohol-Copolymerisat, ein Polyvinylalkohol, ein Polyvinylidenchlorid (PVDC), ein Polyamid, ein flüssigkristallines Polymer (LCP's), SiOx, AlOx oder eine auf Acrylat basierende Beschichtung verwendet werden.

Wenn durch die Funktionsschicht ein wasserdichter Folienschlauch erzeugt werden soll, so kann beispielsweise als Funktionsschicht ein Polyvinylidenchlorid (PVDC), ein flüssigkristallines Polymer (LCP's), SiOx oder Alox verwendet werden.

Die Funktionsschicht weist vorzugsweise eine Schichtdicke von 5 bis 120 µm auf.

Darüber hinaus ist es möglich, dass der mit der Funktionsschicht versehene Folienschlauch im Anschluss an das erfindungsgemäße Verfahren mit weiteren Folien versehen wird. Beispiele hierfür sind Kunststoffdeckfolien, die wasserunlöslich und/oder in organischen Lösemitteln unlöslich sein können.

Auch können die sich durch die Herstellungsverfahren gemäß erster oder zweiter Ausführungsform ergebenden überstehenden Ränder der beschichteten Folienschläuche abgeschnitten werden. Dies kann beispielsweise durch ein heißes Messer erfolgen.

Die erfindungsgemäßen Mehrschichtverbundfolien können transparent bis opak, transluzent oder undurchsichtig pigmentiert oder gefärbt sein, wenn man gegebenenfalls Pigmente, die gefärbt sein können, oder Farbstoffe einbaut.

In manchen Fällen kann es bevorzugt sein, dass man die Haftkleberadhäsivschicht in dem erfindungsgemäßen Verfahren gemäß erster Ausführungsform einseitig auf die Funktionsschichten statt beidseitig auf die Folienschichten aufträgt.

In einer bevorzugten Ausführungsform der vorliegenden Erfindung ist der Folienschlauch innenseitig vorzugsweise im Wesentlichen partikelarm, besonders bevorzugt im Wesentlichen partikelfrei und insbesondere steril.

Weiterer Gegenstand ist die Verwendung von nach dem erfindungsgemäßen Verfahren gemäß erster und zweiter Ausführungsform hergestellte Folienschläuchen für medizinische Zwecke, beispielsweise Infusionsbeutel, Verpackungen, Dialysebeutel, Spüllösungsbeutel, Trockenkonzentratbeutel, Beutel für parenterale Ernährung und Beutel für enterale Ernährung. Dabei können die jeweiligen Folienschläuche auch als Mehrkammerbeutel verwendet werden.

Die vorliegende Erfindung wird anhand des nachfolgenden Ausführungsbeispiels erläutert, wobei das Ausführungsbeispiel die Erfindung nicht beschränkt.

### Ausführungsbeispiel:

Es werden folgende Materialien verwendet:
a) Folienschlauch
   Coextrudierte dreischichtige Schlauchfolie in 470 mm Breite und 120 µm Dicke, wobei die Außenschicht von einem Polypropylen (HC101BF, Borealis), die Mittelschicht von einem Polymerblend aus 40 % Polypropylen (RD208CF, Borealis) und 60 % eines hydrogenierten Styrol-Ethylen/Butylen-Styrol-Copolymers (Tuftec H1062, Asahi, Styrolgehalt 17,5 Gew.-%) und die Innenschicht von einem Polymerblend aus 70 % Polypropylen (RD208CF, Borealis) und 30 % eines hydrogenierten Styrol-Ethylen/Butylen-Styrol-Copolymers (Tuftec 1062, Asahi) gebildet wird.
b) Funktionsschicht
   Als Funktionsschicht dient ein SiOx/PET von Mitsubishi (Techbarrier T).
c) Kleber
   Als Kleber wird ein Klebstoff von der Firma Henkel verwendet, der als Hauptbestandteil Liofol UR 3690 (aliphatischer Kleber auf Polyesterbasis) aufweist.
d) Härter
   Als Härter wird Liofol UR 6090 von der Firma Henkel verwendet.
e) Durchführung
   Der Folienschlauch aus dem vorstehend genannten Material wird coextrudiert und als flachgelegter Folienschlauch auf einen Wickelkern aufgewickelt. In zwei separaten Kaschierschritten wird die Funktionsschicht beidseitig unter Einsatz des mit Härter versetzten Klebers auf den flachgelegten Folienschlauch kaschiert und aufgerollt. Nach jedem Kaschierschritt wird eine Trocknungszeit von einer Woche eingehalten. Anschließend wird die beidseitig kaschierte Schlauchfolie randbeschnitten.

## Patentansprüche

1. Verfahren zur Herstellung eines kaschierten Folienschlauches, umfassend die folgenden Verfahrensschritte:
(a) Herstellen eines Folienschlauches durch Schmelzextrusion eines Kunststoffes, enthaltend Polypropylen, Polyethylen-Copolymere, Styrol-Ethylen/Butylen-Styrol-Blockcopolymere, Styrol-Isopren-Styrol-Blockcopolymere und/oder thermoplastische Elastomere (TPE);
(b) gegebenenfalls Abkühlen des in Verfahrensschritt (a) hergestellten Folienschlauches und
(c) Beschichten des gegebenenfalls abgekühlten Folienschlauches mit einer Funktionsschicht,
wobei das Beschichten (c) durch
(c') Beschichten des gegebenenfalls abgekühlten Folienschlauches mit einer Haftkleberadhäsivschicht auf mindestens einer Seite des Folienschlauches;
(d') gegebenenfalls Trocknen des mit der Haftkleberadhäsivschicht versehenen Folienschlauches;
(e') Kaschieren der mindestens einen mit der Haftkleberadhäsivschicht beschichteten Seite des Folienschlauches mit einer Funktionsschicht;
(f) gegebenenfalls Trocken bzw. Aushärten des kaschierten Folienschlauches erfolgt,
und wobei als Funktionsschicht ein Ethylen-Vinylalkohol-Copolymerisat, ein Polyvinylalkohol, ein Polyvinylidenchlorid (PVDC), ein flüssigkristallines Polymer (LCP's), SiOₓ, AlOₓ oder eine auf Acrylat basierende Beschichtung verwendet werden.

2. Verfahren nach Anspruch 1, **dadurch gekennzeichnet, dass** der in Verfahrensschritt (a) hergestellte Folienschlauch beidseitig kaschiert wird, wobei zunächst die eine Seite des Folienschlauches mit dem Haftkleber beschichtet wird, der mit dem Haftkleber beschichtete Folienschlauch dann gegebenenfalls gekühlt wird, die mit dem Haftkleber beschichtete Seite des Folienschlauches dann kaschiert wird, der einseitig kaschierte Folienschlauch dann gegebenenfalls gekühlt wird und anschließend die zweite Seite des Folienschlauches mit dem Haftkleber beschichtet wird, der mit dem Haftkleber auf der zweiten Seite beschichtete Folienschlauch dann gegebenenfalls gekühlt wird, die mit dem Haftkleber beschichtete zweite Seite des Folienschlauches dann kaschiert wird und der beidseitig kaschierte Folienschlauch dann gegebenenfalls gekühlt oder wärmebehandelt wird.

3. Verfahren nach Anspruch 1 oder 2, **dadurch gekennzeichnet, dass** der in Verfahrensschritt (a) hergestellte Folienschlauch beidseitig kaschiert wird, wobei die Beschichtung des Folienschlauches mit dem Haftkleber und/oder dessen Kaschieren auf beiden Seiten des Folienschlauches zumindest teilweise gleichzeitig erfolgt.

4. Verfahren nach einem der Ansprüche 1 bis 3, **dadurch gekennzeichnet, dass** während des Kaschiervorgangs oder während der Heißlaminierung der Folieninnenraum geschlossen bleibt.

5. Verfahren nach einem der Ansprüche 1 bis 4, **dadurch gekennzeichnet, dass** der Folienschlauch mit einer Funktionsschicht kaschiert oder heißlaminiert wird, welches den Folienschlauch gasdicht und/wasserdicht macht.

6. Verwendung eines nach dem Verfahren gemäß einem der Ansprüche 1 bis 5 hergestellten Folienschlauches für medizinische Zwecke, Infusionsbeutel, Verpackungen, Spüllösungsbeutel, Trockenkonzentratbeutel, Dialysebeutel, Beutel für parenterale Ernährung und Beutel für enterale Ernährung.

## Claims

1. A method for producing a laminated film tube, comprising the following method steps:
(a) producing a film tube by melt extrusion of a plastic, comprising polypropylene, polyethylene copolymers, styrene-ethylene/butylene-styrene block copolymers, styrene-isoprene-styrene block copolymers and/or thermoplastic elastomers (TPE),
(b) optionally cooling the film tube produced in method step (a), and
(c) coating the optionally cooled film tube with a functional layer,
wherein coating (c) is effected by
(c') coating the optionally cooled film tube with an adhesive layer on at least one side of the film tube;
(d') optionally drying the film tube provided with the adhesive layer;
(e') laminating the at least one side of the film tube coated with the adhesive layer with a functional layer;
(f') optionally drying the laminated film tube,
and wherein an ethylene-vinyl alcohol copolymer, a polyvinyl alcohol, a polyvinylidene chloride (PVDC), a liquid crystalline polymer (LCP's), SiOₓ, AlOₓ or an acrylate-based coating is applied as the functional layer.

2. The method according to claim 1, **characterized in that** the film tube produced in method step (a) is laminated on both sides, in which case one side of the film tube is first coated with the adhesive, the film tube coated with the adhesive is then optionally cooled, the side of the film tube coated with the adhesive is then laminated, the film tube laminated on one side is then optionally cooled, and the second side of the film tube is thereafter coated with the adhesive, the film tube coated with the adhesive on the second side is then optionally cooled, the record side of the film tube coated with the adhesive is then laminated, and the film tube laminated on both sides is then optionally cooled or heated.

3. The method according to claim 1 or 2, **characterized in that** the film tube produced in method step (a) is laminated on both sides, the coating of the film tube with the adhesive and/or its lamination taking place at least partially simultaneously on both sides of the film tube.

4. The method according to any one of claims 1 to 3, **characterized in that**, during the laminating process or during the heat lamination, the film interior remains closed.

5. The method according to any one of claims 1 to 4, **characterized in that** the film tube is laminated or heat-laminated with a functional layer, which renders the film tube gas-tight and/or water-tight.

6. A method of producing infusion bags, packages, dialysis bags, bags containing irrigation solution, bags containing dry concentrate, bags for parenteral nutrition, and bags for enteral nutrition, comprising the step of producing a film tube by the method of any one of claims 1 to 5.

## Revendications

1. Procédé de fabrication d'un film tubulaire laminé, comprenant les étapes de procédé suivantes :
(a) fabrication d'un film tubulaire par extrusion à l'état fondu d'une matière plastique contenant du polypropylène, des copolymères de polyéthylène, des copolymères blocs de styrène-éthylène/butylène-styrène, des copolymères blocs de styrène-isoprène-styrène et/ou des élastomères thermoplastiques (TPE),
(b) refroidissement le cas échéant du film tubulaire réalisé à l'étape de procédé (a), et
(c) revêtement du film tubulaire refroidi le cas échéant avec une couche fonctionnelle,
le revêtement (c) étant réalisé par :
(c') revêtement du film tubulaire refroidi le cas échéant avec une couche de produit adhésif sur au moins une face du film tubulaire;
(d') séchage le cas échant du film tubulaire muni de la couche de produit adhésif ;
(e') laminage de la au moins une face du film tubulaire revêtu de la couche de produit adhésif avec une couche fonctionnelle;
(f) séchage ou respectivement durcissement le cas échéant du film tubulaire laminé,
et **caractérise en ce qu'**un copolymère ethylene-alcool vinylique, un alcool polyvinylique, un chlorure de polyvinylidene (PVDC), un polymère cristal liquide (LCP's), SiOₓ, AlOₓ, un revêtement basé d'acrylate est utilisé pour la couche fonctionnelle.

2. Procédé selon la revendication 1, **caractérisé en ce que** le film tubulaire obtenu lors de l'étape de procédé (a) est laminé sur les deux faces, l'une des faces du film tubulaire étant tout d'abord revêtue du produit adhésif, le film tubulaire revêtu du produit adhésif étant ensuite refroidi le cas échéant, la face du film tubulaire revêtue du produit adhésif étant ensuite laminée, le film tubulaire laminé sur une face étant ensuite refroidi le cas échéant et ce après quoi la deuxième face du film tubulaire est revêtue avec le produit adhésif, le film tubulaire revêtu sur la deuxième face avec le produit adhésif étant ensuite refroidi le cas échéant, la deuxième face du film tubulaire revêtue du produit adhésif étant ensuite laminée, et le film tubulaire laminé sur les deux faces étant ensuite refroidi ou soumis à un traitement thermique le cas échéant.

3. Procédé selon la revendication 1 ou 2, **caractérisé en ce que** le film tubulaire obtenu lors de l'étape de procédé (a) est laminé sur les deux faces, le revêtement du film tubulaire avec le colle auto-adhésive et/ou son laminage sur les deux faces du film tubulaire étant réalisé au moins en partie de façon simultanée.

4. Procédé selon l'une des revendications 1 à 3, **caractérisé en ce que** l'espace intérieur du film reste fermé pendant le processus de laminage ou pendant le laminage à chaud.

5. Procédé selon l'une des revendications 1 à 4, **caractérisé en ce que** le film tubulaire est laminé ou laminé à chaud avec une couche fonctionnelle, ce qui rend le film tubulaire imperméable au gaz et à l'eau.

6. L'utilisation d'un film tubulaire obtenu grâce au procédé selon l'une des revendications 1 à 5 à des fins médicales, pour des poches d'infusion, des emballages, des poches de solution de rinçage, des poches pour un concentré sec, des poches de dialyse, des poches pour alimentation parentérale et des poches pour alimentation entérique.
